# EUROPEAN PATENT APPLICATION

(11) **EP 4 270 577 A1**
(43) Date of publication of application: **01.11.2023**
(21) Application number: 21910975.8
(22) Date of filing: 23.12.2021
(51) Int. Cl.: H01M 10/0562, H01M 4/133, H01M 4/134, H01M 4/1395, H01M 4/38, H01M 4/46, H01M 4/62, H01M 4/66, H01M 10/05, H01M 10/0585

(54) **FLUORIDE ION SECONDARY BATTERY AND PRODUCTION METHOD FOR SAME**

(30) Priority: 24.12.2020 JP 2020215794
(71) Applicant: Panasonic Holdings Corporation, Osaka 571-8501 (JP); TOYOTA JIDOSHA KABUSHIKI KAISHA, Toyota-shi Aichi 471-8571 (JP)
(72) Inventor: HINOGAMI Reiko, Kadoma-shi, Osaka 571-0057 (JP); MIKI Hidenori, Toyota-shi, Aichi 471-8571 (JP)
(74) Representative: Eisenführ Speiser
(86) International application number: PCT/JP2021/047920
(87) International publication number: WO 2022/138836

(57) **Abstract**

A fluoride ion secondary battery 1 includes, in the following order: a positive electrode layer 2 including at least one element selected from the group consisting of a first metal element, a carbon element, and a sulfur element, the positive electrode layer 2 having capability of fluorination and defluorination; a solid electrolyte layer 3 including a first solid electrolyte material, the first solid electrolyte material including a second metal element; and a negative electrode layer 4 including a second solid electrolyte material and at least one, functioning as a current collector, selected from the group consisting of particles of a simple substance of Al and particles of an Al alloy, the second solid electrolyte material including a third metal element. The second metal element and the third metal element each have lower fluorination potential and defluorination potential than the at least one element included in the positive electrode layer 2 and an aluminum element have, the at least one element being selected from the group consisting of the first metal element, the carbon element, and the sulfur elements.

## Description

### TECHNICAL FIELD

The present disclosure relates to a fluoride ion secondary battery and a method for manufacturing the same.

### BACKGROUND ART

Lithium-ion secondary batteries have been widespread as the secondary battery having a high energy density. Further, lithium-ion all-solid-state batteries using an incombustible inorganic solid electrolyte have been proposed. Such lithium-ion all-solid-state batteries have high safety. For this reason, lithium-ion all-solid-state batteries have been widely researched and developed.

As one type of batteries using a solid electrolyte as above, fluoride ion secondary batteries in which fluoride ions (F⁻) shuttle have been proposed. Fluoride ion secondary batteries have a high theoretical energy density. Among solid electrolytes that can be used in fluoride ion secondary batteries, materials that have been reported as having a relatively high fluoride ion conductivity and having a wide potential window are, for example, LA₁₋ₓEAₓF₃₋ₓ in which an alkaline earth metal is added to a tysonite compound (Non Patent Literature 1) and a fluorite compound Ca_{1-y}Ba_{y}F₂ (Non Patent Literature 2). Here, in LA₁₋ₓEAₓF₃₋ₓ, x is 0.01 or more and 0.2 or less, "LA" represents a rare earth metal such as La or Ce, and "EA" represents an alkaline earth metal such as Ca, Sr, or Ba. In the fluorite compound Ca_{1-y}Ba_{y}F₂, y is 0.1 or more and 0.9 or less. These solid electrolyte materials can be used also as the material of the negative electrode active material. In other words, these solid electrolyte materials can be used as the self-formed negative electrode. Using these solid electrolyte materials as the self-formed negative electrode makes it possible to reduce the constituent elements of the battery. Further, Patent Literature 1 discloses a negative electrode current collector material in which the short circuit of the battery, which is a problem in the self-forming negative electrode reaction, does not occur.

### CITATION LIST

### Patent Literature

Patent Literature 1: JP 6638622 B

### Non Patent Literature

Non Patent Literature 1: J. Mat. Chem., 2011, 21, 17059
Non Patent Literature 2: Dalton Trans., 2018, 47, 4105-4117

### SUMMARY OF INVENTION

### Technical Problem

The present disclosure provides a fluoride ion secondary battery using the self-forming negative electrode reaction, in which aluminum, which is a light element, functions as the negative electrode current collector to enhance, for example, the energy density per weight.

### Solution to Problem

A fluoride ion secondary battery of the present disclosure includes, in the following order:
a positive electrode layer including at least one element selected from the group consisting of a first metal element, a carbon element, and a sulfur element, the positive electrode layer having capability of fluorination and defluorination;
a solid electrolyte layer including a first solid electrolyte material, the first solid electrolyte material including a second metal element; and
a negative electrode layer including a second solid electrolyte material and at least one, functioning as a current collector, selected from the group consisting of particles of a simple substance of Al and particles of an Al alloy, the second solid electrolyte material including a third metal element, wherein
the second metal element has lower fluorination potential and defluorination potential than the at least one element included in the positive electrode layer and an aluminum element have, the at least one element being selected from the group consisting of the first metal element, the carbon element, and the sulfur element, and
the third metal element has lower fluorination potential and defluorination potential than the at least one element included in the positive electrode layer and an aluminum element have, the at least one element being selected from the group consisting of the first metal element, the carbon element, and the sulfur element.

### Advantageous Effects of Invention

The present disclosure provides a fluoride ion secondary battery using the self-forming negative electrode reaction, in which aluminum, which is a light element, functions as the negative electrode current collector to enhance, for example, the energy density per weight.

### BRIEF DESCRIPTION OF DRAWINGS

FIG. 1 is a cross-sectional view schematically showing a fluoride ion secondary battery according to an embodiment of the present disclosure.
FIG. 2 shows the Al 2p spectra by X-ray photoelectron spectroscopy (XPS) analysis on negative electrode mixtures obtained in Examples 1 and 3.
FIG. 3 is a graph showing the results of a charge and discharge test on evaluation cells obtained in Examples 1 to 3 and Comparative Example 1.
FIG. 4 is a graph showing the results of the charge and discharge test on evaluation cells obtained in Example 4 and Comparative Example 2.
FIG. 5 shows the Al 2p spectra by XPS analysis on a negative electrode after a charge test and the charge and discharge test on the evaluation cell obtained in Example 1.

### DESCRIPTION OF EMBODIMENT

### <Outline of One Aspect according to the Present Disclosure>

A fluoride ion secondary battery according to a first aspect of the present disclosure includes, in the following order:
a positive electrode layer including at least one element selected from the group consisting of a first metal element, a carbon element, and a sulfur element, the positive electrode layer having capability of fluorination and defluorination;
a solid electrolyte layer including a first solid electrolyte material, the first solid electrolyte material including a second metal element; and
a negative electrode layer including a second solid electrolyte material and at least one, functioning as a current collector, selected from the group consisting of particles of a simple substance of Al and particles of an Al alloy, the second solid electrolyte material including a third metal element, wherein
the second metal element has lower fluorination potential and defluorination potential than the at least one element included in the positive electrode layer and an aluminum element have, the at least one element being selected from the group consisting of the first metal element, the carbon element, and the sulfur element, and
the third metal element has lower fluorination potential and defluorination potential than the at least one element included in the positive electrode layer and an aluminum element have, the at least one element being selected from the group consisting of the first metal element, the carbon element, and the sulfur element.

The fluoride ion secondary battery according to the first aspect is a battery using the self-forming negative electrode reaction. Here, in conventional fluoride ion secondary batteries using the self-forming negative electrode reaction, in the case where aluminum is used for weight reduction as the material of the negative electrode current collector layer disposed in contact with the solid electrolyte layer, it has been difficult to cause aluminum to function as the negative electrode current collector to achieve a battery exhibiting a practical capacity. In contrast with this, in the fluoride ion secondary battery according to the first aspect, by providing the negative electrode layer including the at least one selected from the group consisting of the particles of the simple substance of Al and the particles of the Al alloy and the second solid electrolyte material including the third metal element, it is possible to cause aluminum to function as the negative electrode current collector. Therefore, the first aspect of the present disclosure can provide a fluoride ion secondary battery using the self-forming negative electrode reaction, in which aluminum, which is a light element, functions as the negative electrode current collector.

In a second aspect of the present disclosure, for example, in the fluoride ion secondary battery according to the first aspect, the second metal element may be at least one element selected from the group consisting of La, Ba, Ca, Ce, and Sr.

The fluoride ion secondary battery according to the second aspect can be increased in capacity.

In a third aspect of the present disclosure, for example, in the fluoride ion secondary battery according to the second aspect, the second metal element may be at least two elements selected from the group consisting of La, Ba, Ca, Ce, and Sr.

The fluoride ion secondary battery according to the third aspect can be further increased in capacity.

In a fourth aspect of the present disclosure, for example, in the fluoride ion secondary battery according to any one of the first to third aspects, the third metal element may be at least one element selected from the group consisting of La, Ba, Ca, Ce, and Sr.

The fluoride ion secondary battery according to the fourth aspect can be increased in capacity.

In a fifth aspect of the present disclosure, for example, in the fluoride ion secondary battery according to the fourth aspect, the third metal element may be at least two elements selected from the group consisting of La, Ba, Ca, Ce, and Sr.

The fluoride ion secondary battery according to the fifth aspect can be further increased in capacity.

In a sixth aspect of the present disclosure, for example, in the fluoride ion secondary battery according to any one of the first to fifth aspects, in the negative electrode layer,
the particles of the simple substance of Al may have surfaces on which the simple substance of Al is bared, or the particles of the Al alloy may have surfaces on which the Al alloy is bared, and
on the surfaces of the particles of the simple substance of Al, the simple substance of Al may be in contact with the second solid electrolyte material, or on the surfaces of the particles of the Al alloy, the Al alloy may be in contact with the second solid electrolyte material.

In the fluoride ion secondary battery according to the sixth aspect, the simple substance of Al or the Al alloy is in contact with the second solid electrolyte material, so that the self-forming negative electrode reaction of the second solid electrolyte material occurs more efficiently in the negative electrode layer. Therefore, the fluoride ion secondary battery according to the sixth aspect can be further increased in capacity.

In a seventh aspect of the present disclosure, for example, in the fluoride ion secondary battery according to any one of the first to sixth aspects, surfaces of the particles of the simple substance of Al and surfaces of the particles of the Al alloy may be substantially free of an Al oxide film.

In the fluoride ion secondary battery according to the seventh aspect, the Al oxide film does not hinder the self-forming negative electrode reaction of the second solid electrolyte material from occurring on the surfaces of the particles of the simple substance of Al and the surfaces of the particles of the Al alloy. Consequently, in the fluoride ion secondary battery according to the seventh aspect, the self-forming negative electrode reaction of the second solid electrolyte material occurs more efficiently in the negative electrode layer. Therefore, the fluoride ion secondary battery according to the seventh aspect can be further increased in capacity.

In an eighth aspect of the present disclosure, for example, in the fluoride ion secondary battery according to any one of the first to seventh aspects, the particles of the simple substance of Al and the particles of the Al alloy each may have a particle diameter of 50 nm or less.

In the fluoride ion secondary battery according to the eighth aspect, the particles of the simple substance of Al and the particles of the Al alloy each have a particle diameter of 50 nm or less, so that the self-forming negative electrode reaction of the second solid electrolyte material occurs more efficiently in the negative electrode layer. Therefore, the fluoride ion secondary battery according to the eighth aspect can be further increased in capacity.

In a ninth aspect of the present disclosure, for example, when the fluoride ion secondary battery according to any one of the first to eighth aspects is in a completely discharged state, the negative electrode layer in an open-circuit state may have a potential lower than -1.1 V (vs. Pb/PbF₂).

The fluoride ion secondary battery according to the ninth aspect can be increased in capacity.

In a tenth aspect of the present disclosure, for example, in the fluoride ion secondary battery according to any one of the first to ninth aspects, the first metal element may be at least one element selected from the group consisting of Cu, Bi, Pb, Sb, Fe, Zn, Ni, Mn, Sn, Ag, Cr, In, Ti, and Co.

The fluoride ion secondary battery according to the tenth aspect can be increased in capacity.

In an eleventh aspect of the present disclosure, for example, in the fluoride ion secondary battery according to any one of the first to tenth aspects, a content of the second solid electrolyte material in the negative electrode layer may be 10 mass% or more and 95 mass% or less.

In the fluoride ion secondary battery according to the eleventh aspect, the self-forming negative electrode reaction of the second solid electrolyte material occurs efficiently in the negative electrode layer. Therefore, the fluoride ion secondary battery according to the eleventh aspect can be increased in capacity.

In a twelfth aspect of the present disclosure, for example, in the fluoride ion secondary battery according to any one of the first to eleventh aspects, a proportion of a sum of the particles of the simple substance of Al and the particles of the Al alloy in the negative electrode layer may be 1 mass% or more and 50 mass% or less.

In the fluoride ion secondary battery according to the twelfth aspect, the self-forming negative electrode reaction of the second solid electrolyte material occurs efficiently in the negative electrode layer. Therefore, the fluoride ion secondary battery according to the twelfth aspect can be increased in capacity.

In a thirteenth aspect of the present disclosure, for example, in the fluoride ion secondary battery according to any one of the first to twelfth aspects, a ratio of a mass of the second solid electrolyte material to a sum of a mass of the particles of the simple substance of Al and a mass of the particles of the Al alloy in the negative electrode layer may be 8 or more and 95 or less.

In the fluoride ion secondary battery according to the thirteenth aspect, it is possible to efficiently exhibit the function of the particles of the simple substance of Al and the particles of the Al alloy as the current collector and the function of the second solid electrolyte material as the negative electrode active material. Therefore, the fluoride ion secondary battery according to the thirteenth aspect can be increased in capacity.

A method for manufacturing a fluoride ion secondary battery according to a fourteenth aspect of the present disclosure includes
forming a laminate including, in the following order:
   a positive electrode layer including at least one element selected from the group consisting of a first metal element, a carbon element, and a sulfur element, the positive electrode layer having capability of fluorination and defluorination;
   a solid electrolyte layer including a first solid electrolyte material, the first solid electrolyte material including a second metal element; and
   a negative electrode layer including a second solid electrolyte material and at least one, functioning as a current collector, selected from the group consisting of particles of a simple substance of Al and particles of an Al alloy, the second solid electrolyte material including a third metal element, wherein
the second metal element has lower fluorination potential and defluorination potential than the at least one element included in the positive electrode layer and an aluminum element have, the at least one element being selected from the group consisting of the first metal element, the carbon element, and the sulfur element, and
the third metal element has lower fluorination potential and defluorination potential than the at least one element included in the positive electrode layer and an aluminum element have, the at least one element being selected from the group consisting of the first metal element, the carbon element, and the sulfur element.

The manufacturing method according to the fourteenth aspect can manufacture a fluoride ion secondary battery using the self-forming negative electrode reaction, in which aluminum, which is a light element, functions as the negative electrode current collector.

In a fifteenth aspect of the present disclosure, for example, the manufacturing method according to the fourteenth aspect may further include
performing pulverization and mixing of at least one selected from the group consisting of the simple substance of Al and the Al alloy with the second solid electrolyte material, thereby forming the negative electrode layer including the at least one selected from the group consisting of the particles of the simple substance of Al and the particles of the Al alloy and the second solid electrolyte material, wherein
the pulverization and the mixing may bare the simple substance of Al on surfaces of the particles of the simple substance of Al or the Al alloy on surfaces of the particles of the Al alloy.

According to the manufacturing method according to the fifteenth aspect, through the above pulverization and mixing treatment, the Al oxide film on the surfaces of the particles of the simple substance of Al can be removed to bare the simple substance of Al on the surfaces of the particles of the simple substance of Al, or the Al oxide film on the surfaces of the particles of the Al alloy can be removed to bare the Al alloy on the surfaces of the particles of the Al alloy. Accordingly, in the negative electrode layer of a fluoride ion secondary battery to be manufactured, the simple substance of Al or the Al alloy can be in contact with the second solid electrolyte material. Therefore, the manufacturing method according to the fifteenth aspect can manufacture a fluoride ion secondary battery having a higher capacity.

### <Embodiment of the Present Disclosure>

A fluoride ion secondary battery according to an embodiment of the present disclosure will be described in detail with reference to the drawings.

Fluoride ion secondary batteries are batteries in which fluoride ions are shuttled in the electrolyte to cause a defluorination reaction and a fluorination reaction to proceed in each of the positive electrode and the negative electrode to obtain an electromotive force.

The fluoride ion secondary battery according to the embodiment of the present disclosure includes a positive electrode layer, a solid electrolyte layer, and a negative electrode layer in this order. The positive electrode layer is a layer including at least one element selected from the group consisting of a first metal element, a carbon element, and a sulfur element, and having capability of fluorination and defluorination. The solid electrolyte layer includes a first solid electrolyte material, and the first solid electrolyte material includes a second metal element. The second metal element has lower fluorination potential and defluorination potential than the at least one element included in the positive electrode layer and an aluminum element have, where the at least one element is selected from the group consisting of the first metal element, the carbon element, and the sulfur element. The negative electrode layer includes a second solid electrolyte material and at least one, functioning as the current collector, selected from the group consisting of particles of a simple substance of Al and particles of an Al alloy, and the second solid electrolyte material includes a third metal element. In other words, in the negative electrode layer, the at least one selected from the group consisting of the particles of the simple substance of Al and the particles of the Al alloy functions as the current collector. The third metal element has lower fluorination potential and defluorination potential than the at least one element included in the positive electrode layer and an aluminum element have, where the at least one element is selected from the group consisting of the first metal element, the carbon element, and the sulfur element.

To enhance the current collecting function, the fluoride ion secondary battery according to the embodiment of the present disclosure may further include: a positive electrode current collector disposed in electrical contact with the positive electrode layer; and a negative electrode current collector disposed in electrical contact with the negative electrode layer.

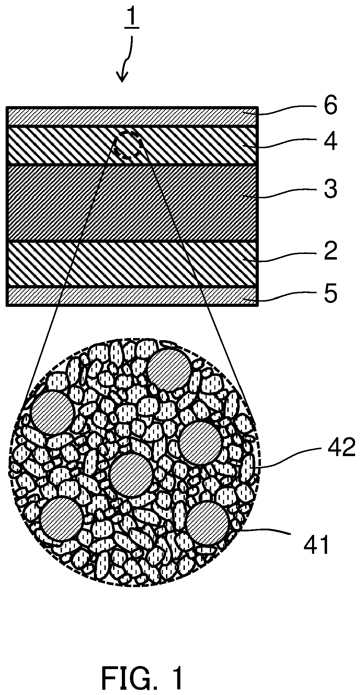

FIG. 1 is a cross-sectional view schematically showing the fluoride ion secondary battery according to the embodiment of the present disclosure. A fluoride ion secondary battery 1 shown in FIG. 1 includes a positive electrode current collector 5, a positive electrode layer 2, a solid electrolyte layer 3, a negative electrode layer 4, and a negative electrode current collector 6 in this order. The solid electrolyte layer 3 is disposed between the positive electrode layer 2 and the negative electrode layer 4. The configurations will be described in detail.

### (Positive Electrode Layer)

The positive electrode layer 2 includes at least one element selected from the group consisting of the first metal element, the carbon element, and the sulfur element. The first metal element, the carbon element, and the sulfur element, which can be included in the positive electrode layer 2, are usually fluorinated upon charge and defluorinated upon discharge. Owing to having an extremely high nucleophilicity, fluoride ions react with many elements to form a fluoride. Meanwhile, defluorination reaction is required to occur upon discharge in the positive electrode layer 2. In other words, the positive electrode layer 2 is required to be a layer in which not only a fluorination reaction but also a defluorination reaction can occur. Further, the positive electrode layer 2 may provide functions as both the positive electrode current collector and the positive electrode active material. Accordingly, the positive electrode current collector 5 may not be provided in the fluoride ion secondary battery 1.

The first metal element is, for example, at least one element selected from the group consisting of Cu, Bi, Pb, Sb, Fe, Zn, Ni, Mn, Sn, Ag, Cr, In, Ti, and Co.

The positive electrode layer 2 may be any one of: a layer including the first metal element; a layer including the carbon element; a layer including the sulfur element; a layer including any two of the first metal element, the carbon element, and the sulfur element; and a layer including all of the first metal element, the carbon element, and the sulfur element. The layer including the first metal element may be, for example, a metal electrode layer including the first metal element. The layer including the carbon element may be, for example, a carbon electrode layer. The layer including the sulfur element may be, for example, a layer including CeSF. The first metal element, which can be included in the positive electrode layer 2, may be a simple substance of the first metal element, or may be an alloy including the first metal element. The alloy including the first metal element may include only one first metal element, or may include two or more first metal elements. In the case where the alloy includes two or more first metal elements, it is desirable that a metal element having the highest fluorination potential and defluorination potential among those of the plurality of first metal elements in the alloy (this metal element is hereinafter referred to as a metal element A) should be the main component of the alloy. The proportion of the metal element A in the alloy may be 50 mol% or more, 70 mol% or more, or 90 mol% or more. Further, the carbon element, which can be included in the positive electrode layer 2, may be, for example, a carbon material such as graphite or graphene. The "main component" means a component included in the largest molar ratio among a plurality of components included.

The thickness of the positive electrode layer 2 before charge is, for example, 1 µm or more, and may be 10 µm or more. By appropriately adjusting the thickness of the positive electrode layer 2 before charge, the portion that functions as the current collector upon charge, that is, the portion that is not in the reaction with fluoride ions has a sufficiently thickness, thereby achieving a sufficient current collecting function. The positive electrode layer 2 before charge refers to the positive electrode layer 2 in which a fluoride layer including a fluoride of at least one selected from the group consisting of the first metal element and the carbon element is not present.

The positive electrode layer 2 may further include a solid electrolyte material having fluoride ion conductivity. As the solid electrolyte material having fluoride ion conductivity, a known material as the solid electrolyte material having fluoride ion conductivity can be used. For example, the first solid electrolyte material, which is used for the solid electrolyte layer 3, or the second solid electrolyte material, which is used for the negative electrode layer 4, may be used for the positive electrode layer 2.

### (Positive Electrode Current Collector)

As described above, the positive electrode layer 2 may function as the positive electrode current collector. Accordingly, a positive electrode current collector as a separate member from the positive electrode layer 2 may not be provided. However, considering the corrosion due to fluorination of the positive electrode layer 2, a positive electrode current collector having high chemical stability may be additionally provided as the auxiliary current collector, as in the positive electrode current collector 5 shown in FIG. 1. The auxiliary current collector is, for example, a current collector including Au, Pt, Al, Cu, Ni, Ti, Cr, Mo, W, Zr, stainless steel, or graphite.

### (Solid Electrolyte Layer)

The solid electrolyte layer 3 includes the first solid electrolyte material including the second metal element. The second metal element has lower fluorination potential and defluorination potential than the at least one element included in the positive electrode layer 2 and an aluminum element have, where the at least one element is selected from the group consisting of the first metal element, the carbon element, and the sulfur element. The second metal element may be deposited as a simple substance of metal upon charge, and may be fluorinated upon discharge. As will be described later, in the fluoride ion secondary battery 1 according to the present embodiment, the charge reaction and the discharge reaction occur mainly inside the negative electrode layer 4, that is, at the interface between the particles of the simple substance of Al or the particles of the Al alloy and the third solid electrolyte material in the negative electrode layer 4. However, in the final stage of charge and discharge and the like, the charge and discharge reaction sometimes occurs not only inside the negative electrode layer 4 but also at the interface between the solid electrolyte layer 3 and the negative electrode layer 4. In other words, a part of the solid electrolyte layer 3 in the vicinity of the interface with the negative electrode layer 4 may become a negative electrode active material layer by the self-forming reaction of the first solid electrolyte material upon charge. This negative electrode active material layer is a layer including a simple substance of the second metal element, and is generated from the solid electrolyte layer 3 in a self-forming manner.

The first solid electrolyte material is usually a material including the second metal element and a fluorine element and having fluoride ion conductivity. As described above, the second metal element has lower fluorination potential and defluorination potential than the at least one element included in the positive electrode layer 2 has, where the at least one element is selected from the group consisting of the first metal element, the carbon element, and the sulfur element. In other words, in the case where the positive electrode layer 2 includes the first metal element, the second metal element has lower fluorination potential and defluorination potential than the first metal element has. Similarly, in the case where the positive electrode layer 2 includes the carbon element, the second metal element has lower fluorination potential and defluorination potential than the carbon element has. Similarly, in the case where the positive electrode layer 2 includes the sulfur element, the second metal element has lower fluorination potential and defluorination potential than the sulfur element has. The fluorination potential and the defluorination potential can be measured by, for example, cyclic voltammetry (CV). The difference in fluorination potential between the first metal element, the carbon element, or the sulfur element and the second metal element is, for example, 0.05 V or more, and may be 0.1 V or more. Further, the difference in defluorination potential between the first metal element, the carbon element, or the sulfur element and the second metal element is, for example, 0.05 V or more, and may be 0.1 V or more as well.

The second metal element also has lower fluorination potential and defluorination potential than an aluminum element has. The difference in fluorination potential between Al and the second metal element is, for example, 0.05 V or more, and may be 0.1 V or more. Further, the difference in defluorination potential between Al and the second metal element is, for example, 0.05 V or more, and may be 0.1 V or more as well.

The second metal element is, for example, at least one element selected from the group consisting of La, Ba, Ca, Ce, and Sr. To enhance the capacity of the fluoride ion secondary battery 1, the second metal element may be at least two elements selected from the group consisting of La, Ba, Ca, Ce, and Sr. In the case where the second metal element includes two or more elements, a metal element having the highest fluorination potential and defluorination potential among those of the plurality of second metal elements (this metal element is hereinafter referred to as a metal element B) may be the main component among all the metal elements included in the first solid electrolyte material. The proportion of the metal element B among all the metal elements included in the first solid electrolyte material may be 50 mol% or more, 70 mol% or more, or 90 mol% or more.

The first solid electrolyte material including the second metal element is, for example, Ce₁₋ₓSrₓF₃₋ₓ (0 ≤ x ≤ 1), La₁₋ₓCaₓF₃₋ₓ (0 ≤ x ≤ 1), La₁₋ₓBaₓF₃₋ₓ (0 ≤ x ≤ 1), Ca₂₋ₓBaₓF₄ (0 ≤ x ≤ 2), or Ce₁₋ₓBaₓF₃₋ₓ (0 ≤ x ≤ 1). The above x each may be more than 0, 0.05 or more, or 0.1 or more. Further, the above x each may be less than 1, 0.95 or less, or 0.9 or less. The shape of the first solid electrolyte material is not particularly limited, and is, for example, particulate.

The thickness of the solid electrolyte layer 3 is, for example, 10 µm or more, and may be 50 µm or more. On the other hand, the thickness of the solid electrolyte layer 3 is, for example, 2000 µm or less. The solid electrolyte layer 3 having a thickness of 10 µm or more enhances the safety of the fluoride ion secondary battery 1. On the other hand, the solid electrolyte layer 3 having a thickness of 300 µm or less can increase the energy density of the fluoride ion secondary battery 1.

The solid electrolyte layer 3 may further include the third solid electrolyte material having a composition different from that of the first solid electrolyte material. As the third solid electrolyte material, a known material as the solid electrolyte material having fluoride ion conductivity can be used.

### (Negative Electrode Layer 4)

The negative electrode layer 4 includes the second solid electrolyte material and at least one, functioning as the current collector, selected from the group consisting of the particles of the simple substance of Al and the particles of the Al alloy, and the second solid electrolyte material includes the third metal element. As shown in FIG. 1, the negative electrode layer 4 may have the configuration, for example, in which particles 41 are dispersed in a second solid electrolyte material 42, where the particles 41 are the at least one selected from the group consisting of the particles of the simple substance of Al and the particles of the Al alloy. In the negative electrode layer 4, the at least one selected from the group consisting of the particles of the simple substance of Al and the particles of the Al alloy functions as the negative electrode current collector. In the negative electrode layer 4, the third metal element included in the second solid electrolyte material has lower fluorination potential and defluorination potential than the at least one element included in the positive electrode layer 2 and an aluminum element have, where the at least one element is selected from the group consisting of the first metal element, the carbon element, and the sulfur element. Consequently, in the negative electrode layer 4, the third metal element is usually deposited as a simple substance of metal upon charge and fluorinated upon discharge. In other words, a part of the second solid electrolyte material included in the negative electrode layer 4 can function as the negative electrode active material by the self-forming reaction of the second solid electrolyte material. The self-forming reaction of the negative electrode active material in the second solid electrolyte material included in the negative electrode layer 4 usually occurs at the interface between the second solid electrolyte material and the particles of the simple substance of Al or the particles of the Al alloy functioning as the current collector. Consequently, for example, upon charge, at the interface between the second solid electrolyte material and the particles of the simple substance of Al or the particles of the Al alloy, a negative electrode active material layer can be formed that is generated from the second solid electrolyte material in a self-forming manner. This negative electrode active material layer includes a simple substance of the third metal element. In this manner, in the fluoride ion secondary battery 1 according to the present embodiment, the negative electrode layer 4 can provide functions as the negative electrode current collector layer and the negative electrode active material layer.

The second solid electrolyte material is usually a material including the third metal element and a fluorine element and having fluoride ion conductivity. As described above, the third metal element has lower fluorination potential and defluorination potential than the at least one element included in the positive electrode layer 2 has, where the at least one element is selected from the group consisting of the first metal element, the carbon element, and the sulfur element. The difference in fluorination potential between the at least one element included in the positive electrode layer 2 and the third metal element is, for example, 0.05 V or more, and may be 0.1 V or more, where the at least one element is selected from the group consisting of the first metal element, the carbon element, and the sulfur element. Further, the difference in defluorination potential between the at least one element included in the positive electrode layer 2 and the third metal element is, for example, 0.05 V or more, and may be 0.1 V or more as well, where the at least one element is selected from the group consisting of the first metal element, the carbon element, and the sulfur element.

The third metal element has lower fluorination potential and defluorination potential than an aluminum element has. The difference in fluorination potential between Al and the third metal element is, for example, 0.05 V or more, and may be 0.1 V or more. Further, the difference in defluorination potential between Al and the third metal element is, for example, 0.05 V or more, and may be 0.1 V or more as well.

The third metal element is, for example, at least one element selected from the group consisting of La, Ba, Ca, Ce, and Sr. To enhance the capacity of the fluoride ion secondary battery 1, the third metal element may be at least two elements selected from the group consisting of La, Ba, Ca, Ce, and Sr. In the case where the third metal element includes two or more elements, a metal element having the highest fluorination potential and defluorination potential among those of the plurality of third metal elements (this metal element is hereinafter referred to as a metal element X) may be the main component among all the metal elements included in the second solid electrolyte material. The proportion of the metal element X among all the metal elements included in the second solid electrolyte material may be 50 mol% or more, 70 mol% or more, or 90 mol% or more.

The second solid electrolyte material including the third metal element is, for example, Ce₁₋ₓSrₓF₃₋ₓ (0 ≤ × ≤ 1), La₁₋ₓCaₓF₃₋ₓ (0 ≤ × ≤ 1), La₁₋ₓBaₓF₃₋ₓ (0 ≤ × ≤ 1), Ca₂₋ₓBaₓF₄ (0 ≤ x ≤ 2), or Ce₁₋ₓBaₓF₃₋ₓ (0 ≤ x ≤ 1). The above x each may be more than 0, 0.05 or more, or 0.1 or more. Further, the above x each may be less than 1, 0.95 or less, or 0.9 or less. The shape of the second solid electrolyte material is not particularly limited, and is, for example, particulate.

The thickness of the negative electrode layer 4 is, for example, 1 µm or more, and may be 10 µm or more. On the other hand, the thickness of the negative electrode layer 4 is, for example, 100 µm or less. The negative electrode layer 4 having a thickness of 10 µm or more enhances the capacity of the fluoride ion secondary battery 1. On the other hand, the negative electrode layer 4 having a thickness of 100 µm or less can increase the energy density per weight of the fluoride ion secondary battery 1.

In the negative electrode layer 4, the particles of the simple substance of Al may have surfaces on which the simple substance of Al is bared, or the particles of the Al alloy may have surfaces on which the Al alloy is bared. For example, in the case where only the particles of the simple substance of Al are included in the negative electrode layer 4, the particles of the simple substance of Al may have the surfaces on which the simple substance of Al is bared. Alternatively, in the case where only the particles of the Al alloy are included in the negative electrode layer 4, the particles of the Al alloy may have the surfaces on which the Al alloy is bared. Alternatively, in the case where both the particles of the simple substance of Al and the particles of the Al alloy are included in the negative electrode layer 4, only the particles of the simple substance of Al may have the surfaces on which the simple substance of Al is bared, only the particles of the Al alloy may have the surfaces on which the Al alloy is bared, or the particles of the simple substance of Al may have the surfaces on which the simple substance of Al is bared and the particles of the Al alloy may have the surfaces on which the Al alloy is bared. The surfaces on which the simple substance of Al is bared may be a part of the surfaces of the particles of the simple substance of Al, and the simple substance of Al may not be bared on the entire surfaces of the particles of the simple substance of Al. The surfaces on which the Al alloy is bared may be a part of the surfaces of the particles of the Al alloy, and the Al alloy may not be bared on the entire surfaces of the particles of the Al alloy. On the surfaces on which the simple substance of Al is bared, the particles of the simple substance of Al may be in contact with the second solid electrolyte material, or on the surfaces of the Al alloy is bared, the particles of the Al alloy may be in contact with the second solid electrolyte material. In the case where the particles of the simple substance of Al are in contact with the second solid electrolyte material on the surfaces on which Al is bared, or the particles of the Al alloy are in contact with the second solid electrolyte material on the surfaces on which the Al alloy is bared, the self-forming negative electrode reaction of the second solid electrolyte material occurs more efficiently in the negative electrode layer 4. Consequently, the negative electrode layer 4 in an open-circuit state can have a lower potential. As a result, the fluoride ion secondary battery 1 can be further increased in charge and discharge capacity.

The surfaces of the particles of the simple substance of Al and the surfaces of the particles of the Al alloy, which can be included in the negative electrode layer 4, are, for example, substantially free of an Al oxide film. Here, the phrase "the surfaces of the particles of the simple substance of Al and the surfaces of the particles of the Al alloy are substantially free of an Al oxide film" means that, in the Al 2p spectrum by XPS analysis on the material of the negative electrode layer 4, the intensity at a peak of the Al oxide film (i.e., the maximum peak within the range of 75.5 eV or more and 76.5 eV or less) is 1/10 or less of the intensity at a peak of zero-valent Al (the maximum peak existing the range of 72.5 eV or more and 73.5 eV or less). Accordingly, the phrase "the surfaces of the particles of the simple substance of Al and the surfaces of the particles of the Al alloy are substantially free of an Al oxide film" does not deny the presence of a slight amount of the Al oxide film at any part on the surfaces of the particles of the simple substance of Al and the surfaces of the particles of the Al alloy. The surfaces of the particles of the simple substance of Al and the surfaces of the particles of the Al alloy, which can be included in the negative electrode layer 4, are substantially free of an Al oxide film, so that the Al oxide film does not hinder the self-forming negative electrode reaction of the second solid electrolyte material from occurring on the surfaces of the particles of the simple substance of Al and the surfaces of the particles of the Al alloy. Accordingly, the self-forming negative electrode reaction of the second solid electrolyte material occurs more efficiently in the negative electrode layer 4. Consequently, the negative electrode layer 4 in an open-circuit state can have a lower potential. As a result, the fluoride ion secondary battery 1 can be further increased in charge and discharge capacity. The surfaces of the particles of the simple substance of Al and the surfaces of the particles of the Al alloy, which can be included in the negative electrode layer 4, may completely free of an Al oxide film.

The particles of the simple substance of Al and the particles of the Al alloy, which can be included in the negative electrode layer 4, each may have a particle diameter of, for example, 50 nm or less or 20 nm or less. In the case where the particles of the simple substance of Al and the particles of the Al alloy, which can be included in the negative electrode layer 4, each have a particle diameter of 50 nm or less, the self-forming negative electrode reaction of the second solid electrolyte material occurs more efficiently in the negative electrode layer 4. Consequently, the fluoride ion secondary battery 1 can be further increased in charge and discharge capacity. The particle diameter of the particles of the simple substance of Al and the particles of the Al alloy can be confirmed, for example, by measuring the particle diameter of 100 or more particles from an image observed with an electron microscope (e.g., SEM or TEM) and calculating the average value thereof.

When the fluoride ion secondary battery 1 is in a completely discharged state, the negative electrode layer 4 in an open-circuit state may have a potential on the basis of Pb/PbF₂ lower than -1.1 V (vs. Pb/PbF₂). In the case where the negative electrode layer 4 has such a potential when the fluoride ion secondary battery 1 is in an open-circuit state, the fluoride ion secondary battery 1 can achieve a high capacity. Here, the completely discharged state refers to the state where the fluoride ion secondary battery 1 is discharged to the lowest voltage within a predetermined voltage range in the field of equipment in which the fluoride ion secondary battery 1 is used. The completely discharged state refers to, for example, a state where the battery is discharged until the electromotive force at a short circuit of the battery reaches 0.5 V or less.

The content of the second solid electrolyte material in the negative electrode layer 4 may be, for example, 10 mass% or more and 95 mass% or less. Here, the content of the second solid electrolyte material in the negative electrode layer 4 refers to the ratio of the mass of the second solid electrolyte material to the total mass of the negative electrode layer 4. In the case where the negative electrode layer 4 includes the second solid electrolyte material in the above content, the second solid electrolyte material can efficiently function as the negative electrode active material in the negative electrode layer 4. As a result, the fluoride ion secondary battery 1 can achieve a higher charge and discharge capacity. The content of the second solid electrolyte material in the negative electrode layer 4 may be 50 mass% or more, 60 mass% or more, 70 mass% or more, or 80 mass% or more. In the negative electrode layer 4, the content of the second solid electrolyte material may be larger than the proportion of the sum of the particles of the simple substance of Al and the particles of the Al alloy in terms of mass ratio.

The proportion of the sum of the particles of the simple substance of Al and the particles of the Al alloy in the negative electrode layer 4 may be, for example, 1 mass% or more and 50 mass% or less. Here, the proportion of the sum of the particles of the simple substance of Al and the particles of the Al alloy in the negative electrode layer 4 refers to the ratio of the sum of the mass of the particles of the simple substance of Al and the mass of the particles of the Al alloy to the total mass of the negative electrode layer 4. In the case where the negative electrode layer 4 includes the particles of the simple substance of Al and the particles of the Al alloy to satisfy the above proportion, the self-forming negative electrode reaction of the second solid electrolyte material occurs efficiently in the negative electrode layer 4. As a result, the fluoride ion secondary battery 1 can achieve a higher charge and discharge capacity. The proportion of the sum of the particles of the simple substance of Al and the particles of the Al alloy in the negative electrode layer 4 may be 40 mass% or less, 30 mass% or less, or 20 mass% or less.

The ratio of the mass of the second solid electrolyte material to the sum of the mass of the particles of the simple substance of Al and the mass of the particles of the Al alloy in the negative electrode layer 4 may be, for example, 8 or more and 95 or less. In the case where the particles of the simple substance of Al, the particles of the Al alloy, and the second solid electrolyte material satisfy the above mass ratio, it is possible to efficiently exhibit the function of the particles of the simple substance of Al and the particles of the Al alloy as the current collector and the function of the second solid electrolyte material as the negative electrode active material. As a result, the fluoride ion secondary battery 1 can achieve a higher charge and discharge capacity. The ratio of the mass of the second solid electrolyte material to the sum of the mass of the particles of the simple substance of Al and the mass of the particles of the Al alloy in the negative electrode layer 4 may be 65 or less.

The negative electrode layer 4 may further include a fourth solid electrolyte material different from the second solid electrolyte material. As the fourth solid electrolyte material, a known material as the solid electrolyte material having fluoride ion conductivity can be used.

The negative electrode layer 4 may further include a conductive additive or the like as necessary. The conductive additive may be, for example, a carbon material such as graphite, graphene, or carbon black.

### (Negative Electrode Current Collector)

As described above, the negative electrode layer 4 includes the at least one, functioning as the negative electrode current collector, selected from the group consisting of the particles of the simple substance of Al and the particles of the Al alloy.
Accordingly, a negative electrode current collector as a separate member from the negative electrode layer 4 may not be provided. However, to perform current collection more stably, an auxiliary current collector such as the negative electrode current collector 6 shown in FIG. 1 may be additionally provided. The auxiliary current collector is, for example, a current collector including Au, Pt, Al, stainless steel, graphite, or the like.

### (Charge and Discharge Reactions of Battery)

The reactions of the fluoride ion secondary battery 1 upon charge and discharge will be described.

Upon charge, a fluorination reaction occurs in which the first metal element, the carbon element, and/or the sulfur element included in the positive electrode layer 2 is fluorinated. This generates, at the interface between the positive electrode layer 2 and the solid electrolyte layer 3, a fluoride layer including a fluoride of the first metal element, the carbon element, and/or the sulfur element. On the other hand, at the interface between the second solid electrolyte material and the particles of the simple substance of Al or the particles of the Al alloy in the negative electrode layer 4, a defluorination reaction of the second solid electrolyte material occurs. This defluorination reaction causes the third metal element to be deposited as a simple substance of metal at the interface between the second solid electrolyte material and the particles of the simple substance of Al or the particles of the Al alloy in the negative electrode layer 4. In other words, upon charge, at the interface between the second solid electrolyte material and the particles of the simple substance of Al or the particles of the Al alloy in the negative electrode layer 4, a layer corresponding to the negative electrode active material layer is generated by the self-forming reaction of the second solid electrolyte material. This negative electrode active material layer includes the simple substance of the third metal element.

Upon discharge, a defluorination reaction of the fluoride layer, which has been formed at the interface between the positive electrode layer 2 and the solid electrolyte layer 3, occurs. Consequently, the fluoride layer, which includes the fluoride of the first metal element, the carbon element, and/or the sulfur element, is no longer present due to discharge. On the other hand, the simple substance of the third metal element, which has been deposited at the interface between the second solid electrolyte material and the particles of the simple substance of Al or the particles of the Al alloy in the negative electrode layer 4, is fluorinated. The layer, which has been formed by the self-forming reaction of the second solid electrolyte material upon charge and corresponds to the negative electrode active material layer, is no longer present due to discharge.

### (Method for Manufacturing Battery)

The fluoride ion secondary battery according to the present embodiment can be manufactured by, for example, the following method.

A method for manufacturing a fluoride ion secondary battery according to the present embodiment includes, for example, forming a laminate including, in the following order: a positive electrode layer including at least one element selected from the group consisting of a first metal element, a carbon element, and a sulfur element, the positive electrode layer having capability of fluorination and defluorination; a solid electrolyte layer including a first solid electrolyte material, the first solid electrolyte material including a second metal element; and a negative electrode layer including a second solid electrolyte material and at least one, functioning as a current collector, selected from the group consisting of particles of a simple substance of Al and particles of an Al alloy, the second solid electrolyte material including a third metal element. The second metal element has lower fluorination potential and defluorination potential than the at least one element included in the positive electrode layer and an aluminum element have, the at least one element being selected from the group consisting of the first metal element, the carbon element, and the sulfur element. The third metal element has lower fluorination potential and defluorination potential than the at least one element included in the positive electrode layer and an aluminum element have, the at least one element being selected from the group consisting of the first metal element, the carbon element, and the sulfur element.

The method for manufacturing a fluoride ion secondary battery according to the present embodiment may further include performing pulverization and mixing of at least one selected from the group consisting of the simple substance of Al and the Al alloy with the second solid electrolyte material, thereby forming the negative electrode layer including the at least one selected from the group consisting of the particles of the simple substance of Al and the particles of the Al alloy and the second solid electrolyte material. The pulverization and the mixing may bare the simple substance of Al on surfaces of the particles of the simple substance of Al or the Al alloy on surfaces of the particles of the Al alloy. According to this method, it is possible to form a negative electrode layer in which the particles of the simple substance of Al are in contact with the second solid electrolyte material on the surfaces on which the simple substance of Al is bared or the particles of the Al alloy are in contact with the second solid electrolyte material on the surfaces on which the Al alloy is bared.

### Examples

The present disclosure will be described below in more detail with reference to examples.

### [Example 1]

### (Production of Solid Electrolyte Material)

CeFs powder (manufactured by Kojundo Chemical Laboratory Co., Ltd.) and SrF₂ powder (manufactured by Kojundo Chemical Laboratory Co., Ltd.) were mixed in the molar ratio of CeF₃:SrF₂ = 95:5. Next, the resultant mixture was milled for 43.5 hours with a planetary ball mill. Next, the mixture after the milling treatment was heat-treated at 1100°C for 1 hour in an inert gas atmosphere. Thus, a solid electrolyte material represented by the compositional formula Ce_{0.95}Sr_{0.05}F_{2.95} (hereinafter referred to as "CSF") was obtained. In other words, in Example 1, the first solid electrolyte material prepared was a solid electrolyte material including Ce and Sr as the second metal elements, and the second solid electrolyte material prepared was a solid electrolyte material including Ce and Sr as the third metal elements.

### (Production of Negative Electrode Mixture)

CSF, which is the second solid electrolyte material prepared as described above, acetylene black (hereinafter referred to as "AB") (manufactured by Denka Company Limited) serving as the conductive additive, and Al powder (manufactured by Kojundo Chemical Laboratory Co., Ltd.) were mixed in the mass ratio of CSF:AB:Al = 84:6:10. Next, the resultant mixture was milled at the rotation speed of 400 rpm for 13 hours with a planetary ball mill. Thus, a negative electrode mixture was obtained.

### (Production of Evaluation Cell)

An amount of 10 mg of the powder of the negative electrode mixture prepared as described above, 200 mg of the powder of CSF, which is the first solid electrolyte material, a lead foil (manufactured by The Nilaco Corporation, 200 µm thick) serving as the positive electrode layer, and an aluminum foil (manufactured by The Nilaco Corporation, 10 µm thick) serving as the positive electrode current collector were laminated in this order inside a mold having a diameter of 10 mm ϕ and subjected to pressure-molding. In the resultant laminate, on the top of the layer formed of the negative electrode mixture (i.e., the negative electrode layer), an aluminum foil (manufactured by The Nilaco Corporation, 10 µm thick) serving as the negative electrode current collector was disposed. Thus, an evaluation cell was obtained.

### [Example 2]

An evaluation cell was obtained in the same manner as in Example 1, except that the rotation speed of the ball mill in the production of the negative electrode mixture was set to 600 rpm.

### [Example 3]

An evaluation cell was obtained in the same manner as in Example 1, except that the rotation speed of the ball mill in the production of the negative electrode mixture was set to 100 rpm.

### [Comparative Example 1]

An evaluation cell was obtained in the same manner as in Example 1, except that no Al powder was added in the production of the negative electrode mixture.

### [Example 4]

### (Production of Solid Electrolyte Material)

LaFs powder (manufactured by Kojundo Chemical Laboratory Co., Ltd.) and CaF₂ powder (manufactured by Kojundo Chemical Laboratory Co., Ltd.) were mixed in the molar ratio of LaF₃:CaF₂ = 9:1. Next, the resultant mixture was milled for 6 hours with a planetary ball mill. Next, the mixture after the milling treatment was heat-treated at 700°C for 1 hour in an inert gas atmosphere. Thus, a solid electrolyte material represented by the compositional formula La_{0.9}Ca_{0.1}F_{2.9} (hereinafter referred to as "LCF") was obtained. In other words, in Example 4, the first solid electrolyte material prepared was a solid electrolyte material including La as the second metal element, and the second solid electrolyte material prepared was a solid electrolyte material including Ca as the third metal element.

### (Production of Negative Electrode Mixture)

A negative electrode mixture was produced in the same manner as in Example 1, except that LCF, which is the second solid electrolyte material prepared as described above, was used instead of CSF.

### (Production of Evaluation Cell)

The powder of the solid electrolyte material used was LCF, which is the first solid electrolyte material prepared in Example 4. The powder of the negative electrode mixture used was the powder of the negative electrode mixture prepared in Example 4. In the same manner as in Example 1 except these, an evaluation cell was obtained.

### [Comparative Example 2]

### (Production of Solid Electrolyte Material)

PbF₂ powder (manufactured by Kojundo Chemical Laboratory Co., Ltd.) and SnF₂ powder (manufactured by Kojundo Chemical Laboratory Co., Ltd.) were mixed in the molar ratio of PbF₂:SnF₂ = 1:1. Next, the resultant mixture was milled for 6 hours with a planetary ball mill. Thus, a solid electrolyte material represented by the compositional formula PbSnF₄ (hereinafter referred to as "PSF") was obtained. The metal elements Pb and Sn included in the obtained solid electrolyte material have higher fluorination potential and defluorination potential than Al has. In other words, in Comparative Example 2, the first solid electrolyte material produced was a solid electrolyte material free of the second metal element, and the second solid electrolyte material produced was a solid electrolyte material free of the third metal element.

### (Production of Negative Electrode Mixture)

A negative electrode mixture was produced in the same manner as in Example 1, except that PSF, which is the second solid electrolyte material prepared as described above, was used instead of CSF.

### (Production of Evaluation Cell)

The powder of the first solid electrolyte material used was PSF, which is the first solid electrolyte material prepared in Comparative Example 2. The powder of the negative electrode mixture used was the powder of the negative electrode mixture prepared in Comparative Example 2. In the same manner as in Example 1 except these, an evaluation cell was obtained.

### [Evaluation]

### (Evaluation of Negative Electrode Mixture)

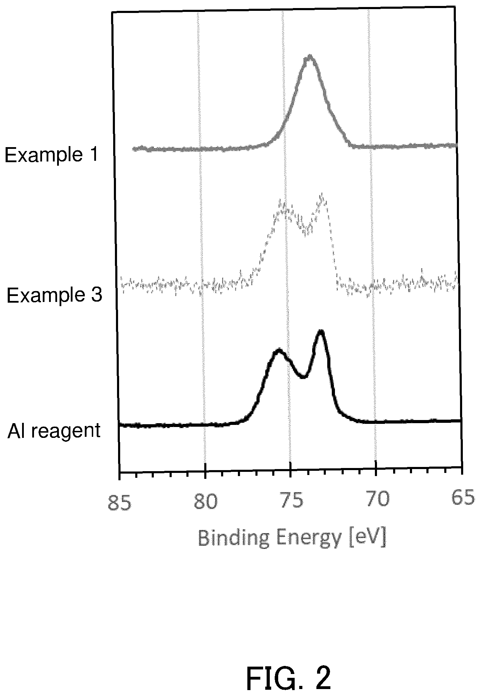

The surface state of Al in the negative electrode mixture obtained in Examples 1 and 3 was observed with an XPS analyzer (PHI5000 Versa Probell manufactured by ULVAC-PHI, Inc., Al-Kα source). FIG. 2 shows the Al 2p spectra by the XPS analysis on the negative electrode mixture obtained in Examples 1 and 3.

In the Al reagent without ball milling, a trivalent peak around 76 eV was observed in addition to a zero-valent peak around 73 eV. The presence of this trivalent peak indicates that the surface is covered with the oxide film. In Example 3 in which the rotation speed of the ball mill in the production of the negative electrode mixture was 100 rpm, the surface oxide film remained. On the other hand, in Example 1 in which the rotation speed of the ball mill was 400 rpm, a trivalent peak disappeared, indicating the occurrence of peeling off of the surface oxide film.

### (Evaluation of Fluoride Ion Secondary Batteries)

The evaluation cells of Examples 1 to 4 and Comparative Examples 1 and 2 were used for a charge and discharge evaluation of the fluoride ion secondary batteries. The charge and discharge evaluation was performed with a potentio-galvanostat (SP240 manufactured by Bio-Logic SAS). A constant-current charge and discharge test was performed at the currents of 40 µA for charge and 20 µA for discharge at the lower limit voltage of -2.35 V and the upper limit voltage of -0.05 V. The charge and discharge test was performed at 140°C.

**[Table 1]**

| | Inclusion of AI/AI alloy in negative electrode layer | Solid electrolyte material in negative electrode layer | Ball mill rotation speed in production of negative electrode mixture | Potential of negative electrode layer in open-circuit state |
|---|---|---|---|---|
| Example 1 | Al | CSF | 400 rpm | -1.40 V |
| Example 2 | Al | CSF | 600 rpm | -1.16 V |
| Example 3 | Al | CSF | 100 rpm | -0.27 V |
| Comparative Example 1 | None | CSF | 400 rpm | -0.11 V |
| Example 4 | Al | LCF | 400 rpm | -1.42 V |
| Comparative Example 2 | Al | PSF | 400 rpm | -0.09 V |

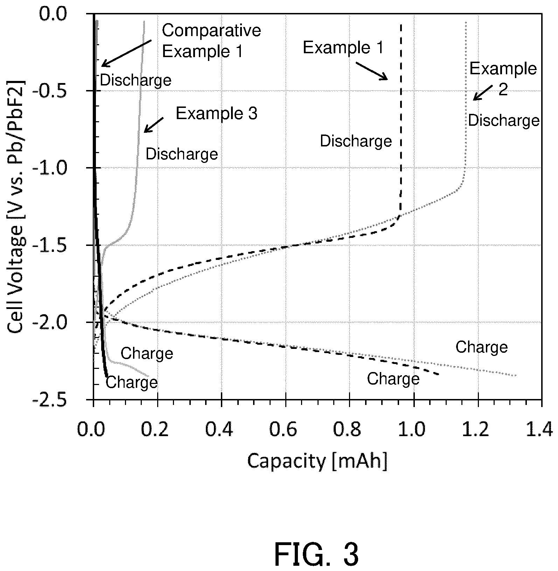

FIG. 3 is a graph showing the results of the charge and discharge test on the evaluation cells obtained in Examples 1 to 3 and Comparative Example 1. FIG. 3 shows the charge and discharge characteristics of the batteries of Examples 1 to 3 and Comparative Example 1, each of which used CSF as the solid electrolyte material. The batteries of Examples 1 to 3, each of which included the negative electrode layer including the particles of the simple substance of Al, exhibited a high capacity of 0.1 mAh or more. In contrast with this, the battery of Comparative Example 1, which included the negative electrode layer free of the particles of the simple substance of Al, exhibited almost no capacity.

Further, the following compares the charge and discharge characteristics of the batteries of Examples 1 to 3. The batteries of Examples 1 and 2 in which the rotation speed of the ball mill in the production of the negative electrode mixture was 400 rpm or more exhibited a higher capacity than the battery of Example 3 in which the rotation speed of the ball mill was 100 rpm. Here, as can be seen from the results of the XPS analysis shown in FIG. 2, the particles of the simple substance of Al in the negative electrode mixture used in the production of the negative electrode layer in Example 1 had surfaces on which the simple substance of Al was bared owing to peeling off of the Al oxide film present on the surfaces. In other words, it is considered that, in the negative electrode layer of Example 1, the particles of the simple substance of Al having the surfaces on which the simple substance of Al was bared were in contact with the second solid electrolyte material. On the other hand, it is considered that the particles of the simple substance of Al in the negative electrode mixture used in the production of the negative electrode layer in Example 3 had surfaces almost covered with the Al oxide film. From these results, it was confirmed that, in the battery including the negative electrode layer in which the particles of the simple substance of Al having the surfaces on which the simple substance of Al is bared are at least partially in contact with the second solid electrolyte material, the negative electrode layer in an open-circuit state has a lower potential and a higher charge and discharge capacity is achieved.

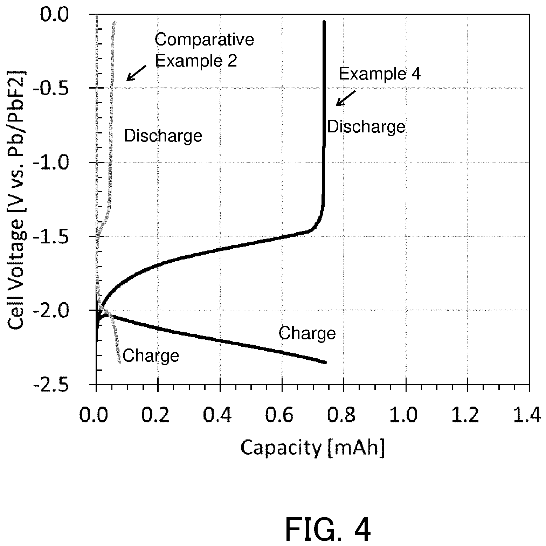

FIG. 4 is a graph showing the results of the charge and discharge test on the evaluation cells obtained in Example 4 and Comparative Example 2. FIG. 4 shows the charge and discharge characteristics of the battery of Example 4 in which LCF was used as the first and second solid electrolyte materials and the battery of Comparative Example 2 in which PSF was used as the first and second solid electrolyte materials. The following compares the charge and discharge characteristics of the batteries of Example 1, Example 4, and Comparative Example 2 in which the rotation speed of the ball mill in the production of the negative electrode mixture was the same rotation speed 400 rpm and the negative electrode layer included the particles of the simple substance of Al. The batteries of Examples 1 and 4 exhibited a high capacity, whereas the battery of Comparative Example 2 exhibited almost no capacity. This is considered due to the battery of Comparative Example 2 using the solid electrolyte material which includes the metal element having higher fluorination potential and defluorination potential than an aluminum element has.

Table 1 shows the potential of the negative electrode layer in an open-circuit state for the case where the evaluation cell is in a completely discharged state. The potential of the negative electrode layer in an open-circuit state for the case where the evaluation cell is in a completely discharged state was measured with the above potentio-galvanostat as well. The negative electrode layers of Examples 1 to 4 exhibited a potential lower than 0 V (vs. Pb/PbF₂). In particular, the negative electrode layers of Examples 1, 2, and 4 exhibited a potential lower than -1.1 V (vs. Pb/PbF₂). On the other hand, the negative electrode layers of Comparative Examples 1 and 2 exhibited a higher potential than the negative electrode layers of Examples 1 to 4 exhibited.

Although the batteries of Examples 1 to 4 and Comparative Example 2 used the particles of the simple substance of Al for the negative electrode layer, it is considered that the similar results would be obtained even with the use of the particles of the Al alloy.

### (State Evaluation of Fluoride Ion Secondary Batteries after Charge and Discharge)

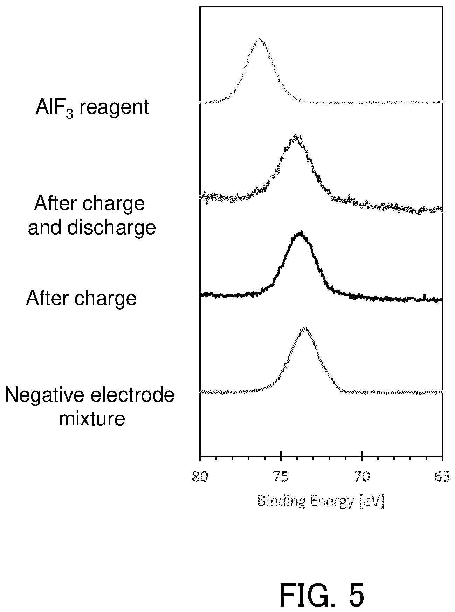

To examine the state change of Al included in the negative electrode layer of Example 1 resulting from the charge and discharge test, the state of the negative electrode layer of the evaluation cell was observed with an XPS analyzer. Specifically, the XPS observation of the negative electrode layer was performed with use of the evaluation cell obtained in Example 1 by peeling off the aluminum foil of the negative electrode current collector after a charge test and after a one-cycle charge and discharge test. FIG. 5 shows the Al 2p spectra by the XPS analysis on the negative electrode layer after the charge test and after the charge and discharge test on the evaluation cell obtained in Example 1. Neither the spectrum after the charge nor the spectrum after the charge and discharge changed in peak position from the spectrum of the negative electrode mixture before the test. In other words, it was confirmed Al included in the negative electrode layer had no state change resulting from the charge and discharge operation. If Al is assumed to function as the active material, the fluorination reaction should proceed to generate AlF₃ upon discharge. However, in the negative electrode layer of Example 1, no deposition of AlF₃ resulting from the charge and discharge operation was observed. Consequently, the present discussion confirmed that Al included in the negative electrode layer functions not as the active material but as the current collector.

From the above, it was also confirmed that the fluoride ion secondary battery using the self-forming negative electrode reaction exhibits the charge and discharge capacity by including: the solid electrolyte layer including the first solid electrolyte material, the first solid electrolyte material including the second metal element; and the negative electrode layer including the second solid electrolyte material and the at least one, functioning as the current collector, selected from the group consisting of the particles of the simple substance of Al and the particles of the Al alloy, the second solid electrolyte material including the third metal element. In other words, in the fluoride ion secondary battery of the present disclosure, Al, which is a light element, functions as the negative electrode current collector, and accordingly the fluoride ion secondary battery using the self-forming negative electrode reaction can be enhanced in energy density per weight, for example. Further, it was also confirmed that, in the fluoride ion secondary battery of the present disclosure, in the case where the particles of the simple substance of Al and the particles of the Al alloy, which can be included in the negative electrode layer, are in contact with the second solid electrolyte material without interposing the Al oxide film therebetween, the negative electrode layer in an open-circuit state can have a lower potential and a higher charge and discharge capacity can be achieved.

The fluoride ion secondary battery of the present disclosure is not limited to the embodiment described above, and can be variously modified and changed within the scope of the invention recited in the claims. For example, to partially or entirely solve the problem described above or to partially or entirely achieve the advantageous effect described above, the technical features in the embodiment described in DESCRIPTION OF EMBODIMENT can be replaced and combined as appropriate. Further, any of the technical features can be deleted as appropriate unless otherwise it is described as essential herein.

### INDUSTRIAL APPLICABILITY

The fluoride ion secondary battery of the present disclosure is expected to be applied to various applications as the chargeable and dischargeable secondary battery.

## Claims

1. A fluoride ion secondary battery comprising, in the following order:
a positive electrode layer including at least one element selected from the group consisting of a first metal element, a carbon element, and a sulfur element, the positive electrode layer having capability of fluorination and defluorination;
a solid electrolyte layer including a first solid electrolyte material, the first solid electrolyte material including a second metal element; and
a negative electrode layer including a second solid electrolyte material and at least one, functioning as a current collector, selected from the group consisting of particles of a simple substance of Al and particles of an Al alloy, the second solid electrolyte material including a third metal element, wherein
the second metal element has lower fluorination potential and defluorination potential than the at least one element included in the positive electrode layer and an aluminum element have, the at least one element being selected from the group consisting of the first metal element, the carbon element, and the sulfur element, and
the third metal element has lower fluorination potential and defluorination potential than the at least one element included in the positive electrode layer and an aluminum element have, the at least one element being selected from the group consisting of the first metal element, the carbon element, and the sulfur element.

2. The fluoride ion secondary battery according to claim 1, wherein
the second metal element is at least one element selected from the group consisting of La, Ba, Ca, Ce, and Sr.

3. The fluoride ion secondary battery according to claim 2, wherein
the second metal element is at least two elements selected from the group consisting of La, Ba, Ca, Ce, and Sr.

4. The fluoride ion secondary battery according to any one of claims 1 to 3, wherein
the third metal element is at least one element selected from the group consisting of La, Ba, Ca, Ce, and Sr.

5. The fluoride ion secondary battery according to claim 4, wherein
the third metal element is at least two elements selected from the group consisting of La, Ba, Ca, Ce, and Sr.

6. The fluoride ion secondary battery according to any one of claims 1 to 5, wherein
in the negative electrode layer,
the particles of the simple substance of Al have surfaces on which the simple substance of Al is bared, or the particles of the Al alloy have surfaces on which the Al alloy is bared, and
on the surfaces of the particles of the simple substance of Al, the simple substance of Al is in contact with the second solid electrolyte material, or on the surfaces of the particles of the Al alloy, the Al alloy is in contact with the second solid electrolyte material.

7. The fluoride ion secondary battery according to any one of claims 1 to 6, wherein
surfaces of the particles of the simple substance of Al and surfaces of the particles of the Al alloy are substantially free of an Al oxide film.

8. The fluoride ion secondary battery according to any one of claims 1 to 7, wherein
the particles of the simple substance of Al and the particles of the Al alloy each have a particle diameter of 50 nm or less.

9. The fluoride ion secondary battery according to any one of claims 1 to 8, wherein
when the fluoride ion secondary battery is in a completely discharged state, the negative electrode layer in an open-circuit state has a potential lower than -1.1 V (vs. Pb/PbF₂).

10. The fluoride ion secondary battery according to any one of claims 1 to 9, wherein
the first metal element is at least one element selected from the group consisting of Cu, Bi, Pb, Sb, Fe, Zn, Ni, Mn, Sn, Ag, Cr, In, Ti, and Co.

11. The fluoride ion secondary battery according to any one of claims 1 to 10, wherein
a content of the second solid electrolyte material in the negative electrode layer is 10 mass% or more and 95 mass% or less.

12. The fluoride ion secondary battery according to any one of claims 1 to 11, wherein
a proportion of a sum of the particles of the simple substance of Al and the particles of the Al alloy in the negative electrode layer is 1 mass% or more and 50 mass% or less.

13. The fluoride ion secondary battery according to any one of claims 1 to 12, wherein
a ratio of a mass of the second solid electrolyte material to a sum of a mass of the particles of the simple substance of Al and a mass of the particles of the Al alloy in the negative electrode layer is 8 or more and 95 or less.

14. A method for manufacturing a fluoride ion secondary battery, the method comprising
forming a laminate including, in the following order:
a positive electrode layer including at least one element selected from the group consisting of a first metal element, a carbon element, and a sulfur element, the positive electrode layer having capability of fluorination and defluorination;
a solid electrolyte layer including a first solid electrolyte material, the first solid electrolyte material including a second metal element; and
a negative electrode layer including a second solid electrolyte material and at least one, functioning as a current collector, selected from the group consisting of particles of a simple substance of Al and particles of an Al alloy, the second solid electrolyte material including a third metal element, wherein
the second metal element has lower fluorination potential and defluorination potential than the at least one element included in the positive electrode layer and an aluminum element have, the at least one element being selected from the group consisting of the first metal element, the carbon element, and the sulfur element, and
the third metal element has lower fluorination potential and defluorination potential than the at least one element included in the positive electrode layer and an aluminum element have, the at least one element being selected from the group consisting of the first metal element, the carbon element, and the sulfur element.

15. The method according to claim 14, further comprising
performing pulverization and mixing of at least one selected from the group consisting of the simple substance of Al and the Al alloy with the second solid electrolyte material, thereby forming the negative electrode layer including the at least one selected from the group consisting of the particles of the simple substance of Al and the particles of the Al alloy and the second solid electrolyte material, wherein
the pulverization and the mixing bare the simple substance of Al on surfaces of the particles of the simple substance of Al or the Al alloy on surfaces of the particles of the Al alloy.
